# EUROPEAN PATENT APPLICATION

(11) **EP 4 379 693 A1**
(43) Date of publication of application: **05.06.2024**
(21) Application number: 21951159.9
(22) Date of filing: 26.07.2021
(51) Int. Cl.: G08B 21/06, B60R 11/04, H04N 23/00, B62D 1/04

(54) **FATIGUE MONITORING CAMERA MOUNTING STRUCTURE, INSTRUMENT PANEL ASSEMBLY AND AUTOMOBILE**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: SUN, Zhiqiang, Hangzhou Bay New District Ningbo, Zhejiang 315336 (CN); GAN, Chengli, Hangzhou Bay New District Ningbo, Zhejiang 315336 (CN); HYO JIN BAE, Hangzhou Bay New District Ningbo, Zhejiang 315336 (CN); YU, Lipeng, Hangzhou Bay New District Ningbo, Zhejiang 315336 (CN)
(74) Representative: Zaboliene, Reda
(86) International application number: PCT/CN2021/108439
(87) International publication number: WO 2023/004540

(57) **Abstract**

A fatigue monitoring camera mounting structure, an instrument panel assembly, and an automobile, the mounting structure comprising: an electrical device assembly (1), used for detecting a fatigue state of a driver; a steering column shield (2), used for being fixedly sleeved on a steering column, the steering column shield (2) being disposed below the electrical device assembly (1), and the steering column shield (2) or the electrical device assembly (1) being fixedly provided with a magnetic member (4); the electrical device assembly (1) and the steering column shield (2) achieve magnetic attraction connection via the magnetic member (4), and the steering column shield (2) is configured to slide back and forth relative to the electrical device assembly (1) when a steering wheel (3) is adjusted back and forth. By providing the magnetic member (4) between the steering column shield (2) and the electrical device assembly (1), different linkage effects are achieved between the two for different adjustment conditions; the invention solves the problem in the existing technology whereby an electrical device assembly (1) fixedly mounted on a steering column shield requires the reservation of an excessively large crush space in the structure of an instrument panel, thus affecting the aesthetic design of the instrument panel.

## Description

### TECHNICAL FIELD

The present document relates to a field of automotive camera structure, in particular to a fatigue monitoring camera mounting structure, an instrument panel assembly, and an automobile.

### DESCRIPTION OF RELATED ART

As automobiles become smarter and safer, it is becoming more and more popular to install fatigue monitoring cameras on the driver's side of the passenger compartment to detect the driver's fatigue status and avoid accidents caused by fatigue driving.

Common fatigue monitoring cameras are mainly installed and arranged in the following three places:
1) Installed and fixed on the A-pillar at the driver's side;
2) Integrated with and installed in the instrument cluster;
3) Fixed to the steering column shield.

Although the three common installation layout can all monitor the driver's fatigue status, they also have their own limitations:
a) If the fatigue monitoring cameras are installed on the A-pillar, due to it is far from the driver's eyes, a high monitoring sensitivity of the camera is required. When the monitoring sensitivity of the camera is insufficient, it is easy to occur inaccurate monitoring;
b) If the fatigue monitoring cameras are installed in the instrument cluster, it requires the automobile to be equipped with the instrument cluster, which complicates the structure of the instrument panel. Moreover, more and more electric vehicles cancel the instrument cluster, making it unable to be widely used in the electric vehicles;
c) If the fatigue monitoring cameras are fixed to the steering column shield, it is required that the overall structure of the camera spaces at least 85mm away from the instrument panel to meet the collapse requirements of the steering column during collision. Therefore, there are restrictions on the appearance design of the instrument panel.

Therefore, it is necessary to provide a fatigue monitoring camera mounting structure that has a simple structure and meets the requirements of collision safety and does not require high camera sensitivity to solve the forgoing technical problems.

### SUMMARY

In order to solve the above technical problems, the present document provides a fatigue monitoring camera mounting structure, which solves the problem in the existing technology of requiring large collapse space in the instrument panel and affecting the appearance design of the instrument panel in case the electrical component assembly is fixed to the steering column shield.

The technical effect of the present document is achieved through the following techniques:
A fatigue monitoring camera mounting structure, including:
An electrical component assembly capable of moving up and down relative to an instrument panel, for detecting a fatigue state of a driver;
A steering column shield configured for being fixedly sleeved around a steering column, and the steering column being configured for fixedly connected to a steering wheel, a side end of the steering column shield being close to the steering wheel, and the steering column shield being located below the electrical component assembly, the steering column shield or the electrical component assembly being provided with a magnetic member, and the electrical component assembly and the steering column shield being magnetically connected through the magnetic member, the steering column shield being capable of sliding back and forth relative to the electrical component assembly when the steering wheel is adjusted back and forth. By connecting the steering column shield and the electrical component assembly through the magnetic member, a simple and flexible connection structure is achieved, making the electrical component assembly forms a semi-link structure together with the steering column shield. Under different adjustment conditions, the two parts present different linkage effects, saving an internal space in the instrument panel, making the automobile interior more concise, and solving the problem in the existing technology of requiring large collapse space in the instrument panel and affecting the appearance design of the instrument panel in case the electrical component assembly is fixed to the steering column shield.

Furthermore, when a collision collapse occurs, the electrical component assembly matches with the steering wheel during the process that the steering column shield moves toward a collapsing direction until it is separated from the electrical component assembly. By matching the shape of the electrical component assembly with the shape of the steering wheel, the electrical component assembly and the steering wheel do not interfere with each other during the separation process of the steering column shield and the electrical component assembly. This allows the steering column shield to drive the steering wheel to complete a collision collapse response in the collapse direction, thereby ensuring the safety performance of the steering wheel during collision.

Furthermore, one of a lower surface of the electrical component assembly and the steering column shield is equipped with a first groove, and a length of which is in an axial direction of the steering column, and the other of the lower surface of the electrical component assembly and the steering column shield is equipped with a first protrusion, which is located in the first groove. One of the first protrusion and the first groove is equipped with the magnetic member, the other of the first protrusion and the first groove is equipped with a ferromagnetic body. By setting the first protrusion and first groove, relative position between the electrical component assembly and the steering column shield is limited, and a good guiding effect is achieved, thereby facilitating a relative sliding between the steering column shield and the electrical component assembly in a collision and collapse of the steering wheel, and meeting a requirement of collapse safety.

Furthermore, a length of the first groove is greater than or equal to a length of the first protrusion. By setting the length of the first groove to be greater than or equal to the length of the first protrusion, the steering column shield can drive the steering wheel to slide back and forth relative to the electrical component assembly, so as to realize the back and forth adjustment of the steering wheel.

Furthermore, the first groove is a strip groove, and the first protrusion is a strip protrusion.

Furthermore, it further includes a first connecting rod, a second connecting rod, and a guide rail bracket.

The guide rail bracket is configured for being fixed on a back portion of the instrument panel, and the guide rail bracket is equipped with a sliding groove.

One end of the first connecting rod is fixedly connected to the electrical component assembly, and the other end of the first connecting rod is fixedly connected to the second connecting rod.

The second connecting rod passes through the sliding groove and is limited in the sliding groove along an axial direction of the second connecting rod. The second connecting rod is capable of sliding up and down along the sliding groove when the steering wheel is adjusted up and down. By setting a sliding groove on the guide rail bracket, and cooperating with the first connecting rod and the second connecting rod, the second connecting rod can slide up and down along the sliding groove, and the steering column shield is adsorbed by the electrical component assembly to drive the steering wheel to move up and down, thereby achieving an up and down adjustment of the steering wheel.

Furthermore, the guide rail bracket is equipped with two side wings, and the sliding groove is arranged on a corresponding side wing.

The second connecting rod is equipped with two clamping portions close to two ends thereof, and the second connecting rod passes through the sliding groove with the clamping portions abutting against inner sides of corresponding side wings.

Furthermore, the instrument panel is equipped with an avoidance opening, and widths of the electrical component assembly and the steering column shield are both less than or equal to a width of the avoidance opening. When the second connecting rod slides up and down along the sliding groove, the electrical component assembly and the steering column shield correspondingly move up and down within the avoidance opening.

Furthermore, it further includes a soft cover, which is fixedly connected between the electrical component assembly and the instrument panel. The soft cover is configured for shielding the first connecting rod, the second connecting rod, and the guide rail bracket.

Furthermore, an outer surface of the magnetic member is covered with an electroplating protective layer for stabilizing the outer surface of the magnetic member.

Furthermore, a lubricating grease is added into the first groove.

In addition, an instrument panel assembly is also provided, which includes the instrument panel and the fatigue monitoring camera mounting structure mentioned above. The fatigue monitoring camera mounting structure includes a guide rail bracket, and the fatigue monitoring camera mounting structure is fixed to a back portion of the instrument panel through the guide rail bracket.

In addition, an automobile is also provided, which includes the instrument panel assembly mentioned above.

As mentioned above, the present document has the following beneficial effects:
1) By connecting the steering column shield with the electrical component assembly through the magnetic member, a simple and flexible connection structure is achieved, making the electrical component assembly form a semi-link structure together with the steering column shield. Under different adjustment conditions, the two parts exhibit different linkage effects, saving a space inside the instrument panel and making the automobile interior more concise, solving the problem in the existing technology of requiring large collapse space in the instrument panel and affecting the appearance design of the instrument panel in case the electrical component assembly is fixed on the steering column shield.
2) By matching the shape of the electrical component assembly with the shape of the steering wheel, the electrical component assembly and the steering wheel will not interfere with each other during the separation process of the steering column shield and the electrical component assembly. This allows the steering column shield to drive the steering wheel to complete a collision collapse response in the collapse direction, thereby ensuring the safety performance of the steering wheel during collision.
3) By setting the first protrusion and the first groove, relative positon between the electrical component assembly and the steering column shield is limited, and a good guiding effect is achieved, thereby facilitating a relative sliding between the steering column shield and the electrical component assembly in a collision and collapse of the steering wheel, and meeting the requirements of collapse safety.
4) By setting the length of the first groove to be greater than or equal to the length of the first protrusion, the steering column shield can drive the steering wheel to slide back and forth relative to the electrical component assembly, so as to realize a back and forth adjustment of the steering wheel.
5) By setting a sliding groove on the guide rail bracket, and cooperating with the first connecting rod and the second connecting rod, the second connecting rod can slide up and down along the sliding groove, and the steering column shield is adsorbed by the electrical component assembly to drive the steering wheel to move up and down, thereby achieving an up and down adjustment of the steering wheel.

### BRIEF DESCRIPTION OF THE DRAWINGS

In order to more clearly illustrate the technical solutions of the present document, the drawings required for the description of the embodiments or the existing technology will be introduced briefly. Obviously, the drawings in the following description only show some of the embodiments of the present document. For those of ordinary skill in the art, other drawings may be obtained based on these drawings without creative work.
Figure 1 is a schematic, front view of a fatigue monitoring camera mounting structure according to an embodiment of the present document;
Figure 2 is a schematic, back view of a fatigue monitoring camera mounting structure according to an embodiment of the present document;
Figure 3 is a schematic, exploded view of a fatigue monitoring camera mounting structure according to an embodiment of the present document;
Figure 4 is a schematic, cross-sectional view of a fatigue monitoring camera mounting structure according to an embodiment of the present document;
Figure 5 is a schematic, structural view of an electrical component assembly according to an embodiment of the present document;
Figure 6 is a schematic, structural view of a steering column shield according to an embodiment of the present document;
Figure 7 is a schematic view showing the change of the fatigue monitoring camera mounting structure before and after a downward adjustment of the steering wheel according to an embodiment of the present document;
Figure 8 is a schematic view showing the change of the fatigue monitoring camera mounting structure before and after a backward adjustment of the steering wheel according to an embodiment of the present document;
Figure 9 is a schematic view showing the change of the fatigue monitoring camera mounting structure before and after the collision and collapse of the steering wheel according to an embodiment of the present document.

Among them, the accompanying symbols in the figure correspond to:
Electrical component assembly 1, first groove 11, steering column shield 2, first protrusion 21, steering wheel 3, magnetic member 4, first connecting rod 5, second connecting rod 6, clamping portion 61, guide rail bracket 7, sliding groove 71, instrument panel 8, avoidance opening 81, and soft cover 9.

### DETAILED DESCRIPTION OF THE EMBODIMENTS

Specific embodiments of the present document will now be clearly and completely described below with reference to the accompanying drawings. Obviously, the described embodiments are only some of the embodiments of the present document, rather than all of the embodiments. Based on the description of the present document, all other embodiments obtained by a person of ordinary skill in the art without creative work shall fall within the protection scope of the present document.

It should be noted that the terms "first", "second", etc. in the description and claims of the present document, as well as the accompanying drawings, are used to distinguish similar objects, without necessarily describing a specific order or sequence. It is to be understood that the data so used are interchangeable under appropriate circumstances so that the embodiments of the present document described herein can be implemented in sequences other than those illustrated or described herein. In addition, the terms "including" and "having", as well as any variations thereof, are intended to cover non-exclusive inclusions. For example, a process, method, system, product, or apparatus that includes a series of steps or units are not limited to those clearly listed, but may include other steps or units that are not clearly listed or inherent to these process, method, product or apparatus.

### Example 1:

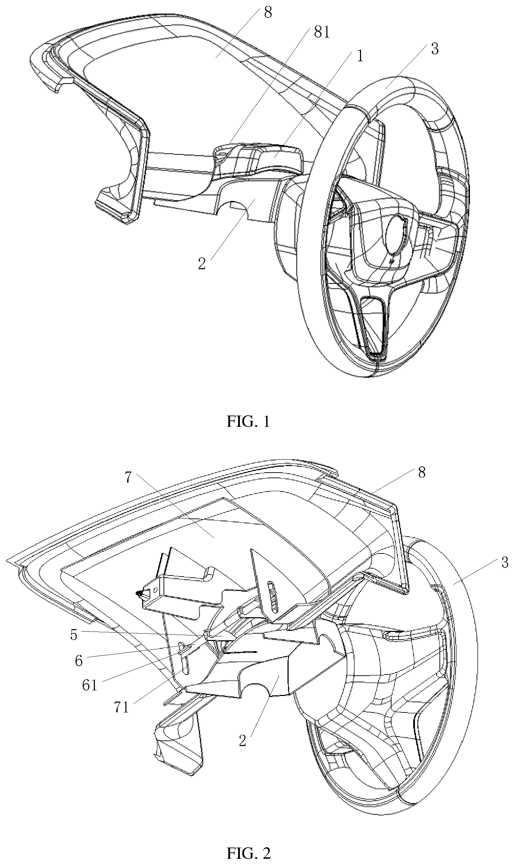

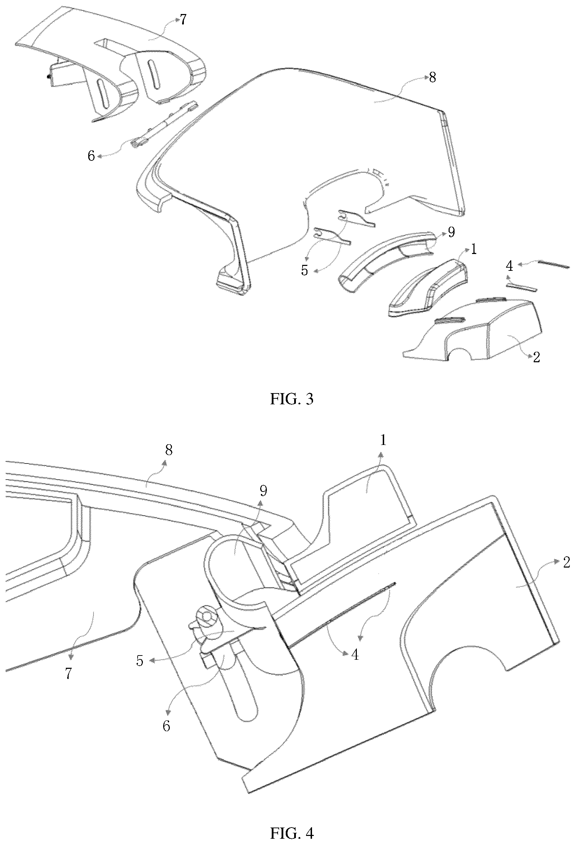

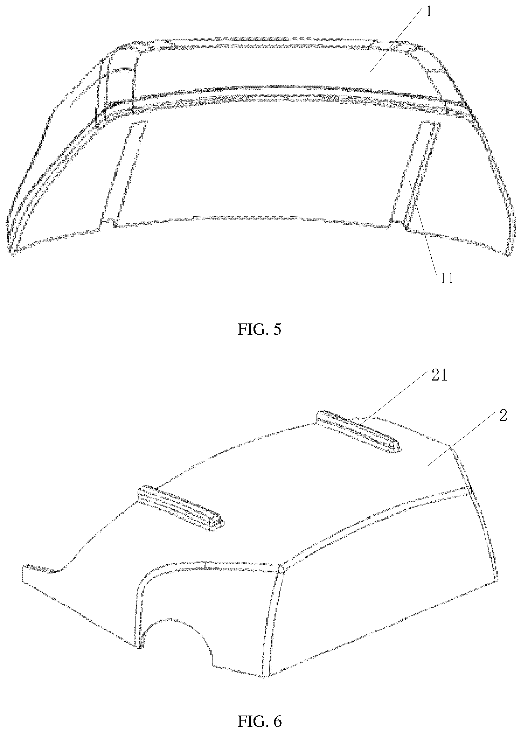

As shown in Figures 1-6, this embodiment provides a fatigue monitoring camera mounting structure, which includes:
An electrical component assembly 1, which can move up and down relative to an instrument panel 8, and is configured for detecting a fatigue state of a driver,
A steering column shield 2 configured for being fixedly sleeved around a steering column. The steering column is fixedly connected to a steering wheel 3, and a side end of the steering column shield 2 is close to the steering wheel 3. The steering column shield 2 is located below the electrical component assembly 1. The steering column shield 2 or the electrical component assembly 1 is provided with a magnetic member 4, which is configured for adsorbing and fixing the electrical component assembly 1 onto the steering column shield 2. The steering column shield 2 is capable of sliding back and forth relative to the electrical component assembly 1 when the steering wheel 3 is adjusted back and forth. The back and forth directions refer to a forward movement direction when the steering wheel 3 moves toward the driver and a backward movement direction when the steering wheel 3 moves away from the driver.

Specifically, the electrical component assembly 1 includes a camera, which is configured for monitoring the fatigue state of the driver. The steering column shield 2 and the electrical component assembly 1 are connected by the magnetic member 4, which enables the steering column shield 2 to slide back and forth relative to the electrical component assembly 1. When the driver collides with the steering wheel 3, the steering column shield 2 drives the steering wheel 3 through the steering column to collapse towards an inner side of the instrument panel 8 along an axial direction of the steering column. At this time, the electrical component assembly 1 remains stationary in the collapse direction.

It should be noted that in the existing technology, the electrical component assembly is fixedly mounted to the steering column shield, so that the electrical component assembly and the steering column shield collapse together towards the inner side of the instrument panel when the steering wheel collapses in a collision. Therefore, it is necessary to reserve a large collapse space in the instrument panel, which affects the appearance design of the instrument panel.

By connecting the steering column shield 2 and the electrical component assembly 1 through the magnetic member 4, a simple and flexible connection structure is achieved, making the electrical component assembly 1 forms a semi-link structure together with the steering column shield 2. Under different adjustment conditions, the two parts exhibit different linkage effects, saving space inside the instrument panel and making the automobile interior more concise, solving the problem in the existing technology of affecting the appearance design of the instrument panel when the electrical component assembly is fixedly connected to the steering column shield.

Preferably, when a collision occurs, the electrical component assembly 1 matches the steering wheel 3 during the steering column shield 2 moves towards the collapse direction and separates from the electrical component assembly 1.

Specifically, during the steering column shield 2 moves towards the collapse direction and separates from the electrical component assembly 1 in a collision, a bottom portion of the steering wheel 3 and the steering column shield 2 gradually moves below the electrical component assembly 1. Due to the shape of the lower surface of the electrical component assembly 1 matches the shape of the bottom portion of the steering wheel 3, the electrical component assembly 1 and the steering wheel 3 do not interference with each other during the separation process of the steering column shield 2 and the electrical component assembly 1, thereby making the steering column shield 2 take the steering wheel 3 to complete a collision collapse response in the collapse direction, and ensuring the safety performance of the steering wheel 3 during the collision process.

Preferably, between the lower surface of the electrical component assembly 1 and the steering column shield 2, one of them is equipped with a first groove 11, a length of which is in an axial direction of the steering column, and the other is equipped with a first protrusion 21 and the first protrusion 21 is located in the first groove 11. Between the first protrusion 21 and the first groove 11, one is equipped with the magnetic member 4 and the other is equipped with a ferromagnetic body.

In this embodiment, the number of the first protrusion 21 and the first groove 11 are both two, and a width of the first protrusion 21 matches a width of the first groove 11. The width direction is a direction perpendicular to an axial direction of the steering column at a top surface of the steering column shield 2, thereby achieving a position limitation between the electrical component assembly 1 and the steering column shield 2 and a good guiding effect, which facilitates relative sliding between the steering column shield 2 and the electrical component assembly 1 in a collision and collapse of the steering wheel 3, and meets the requirement for collapse safety.

Specifically, the magnetic member 4 is made of magnet, while the ferromagnetic body is made of materials such as steel or copper that are easily adsorbed by the magnetic member.

Preferably, the length of the first groove 11 is greater than or equal to the length of the first protrusion 21, and the length direction is in the axial direction of the steering column, so that the steering column shield 2 can take the steering wheel 3 to slide back and forth relative to the electrical component assembly 1, thereby achieving a back and forth adjustment function of the steering wheel 3.

In this embodiment, the first groove 11 is a strip groove, the first protrusion 21 is a strip protrusion, and the magnetic member 4 includes multiple discrete magnetic pieces.

In other embodiments, the first protrusion 21 may be multiple discrete protrusions, and the positions of the discrete protrusions match the position of the first groove 11. Correspondingly, multiple discrete magnetic pieces are located inside the multiple discrete protrusions.

Preferably, it further includes a first connecting rod 5, a second connecting rod 6, and a guide rail bracket 7.

The guide rail bracket 7 is configured for fixing on the back portion of the instrument panel 8, and the guide rail bracket 7 is equipped with a sliding groove 71.

One end of the first connecting rod 5 is fixedly connected to the electrical component assembly 1, and the other end of the first connecting rod 5 is fixedly connected to the second connecting rod 6.

The second connecting rod 6 passes through the sliding groove 71 and is limited in the sliding groove 71 in the axial direction of the second connecting rod 6. The second connecting rod 6 is set to slide up and down along the sliding groove 71 when the steering wheel 3 is adjusted up and down.

Specifically, the length direction of the sliding groove 71 is consistent with an up and down adjustment direction of the steering wheel 3, and the width direction of the sliding groove 71 is perpendicular to the up and down adjustment direction of the steering wheel 3. The outer diameter of the second connecting rod 6 matches the width of the sliding groove 71, so that when the steering wheel 3 moves back and forth, the second connecting rod 6 does not separate from the guide rail bracket 7 in the back and forth directions.

Preferably, the guide rail bracket 7 is equipped with two side wings, and the sliding grooves 71 are arranged on corresponding side wings.

The second connecting rod 6 are equipped with two clamping portions 61 close to two ends of the second connecting rod 6 respectively. The second connecting rod 6 passes through the sliding grooves 71 with the clamping portions 61 abutting against inner sides of the corresponding side wings.

Specifically, the guide rail bracket 7 includes an instrument panel mounting surface 71 and the two side wings 73. The instrument panel mounting surface 71 is fixedly connected to the two side wings 73, and the two side wings 73 are symmetrically arranged on the back portion of the instrument panel mounting surface 71, and are perpendicular to the instrument panel mounting surface 71.

Specifically, the two sliding grooves 71 are symmetrically arranged on the corresponding side wings 73, and a length of the second connecting rod 6 is greater than or equal to a distance between the two side wings 73.

Specifically, a length of the clamping portion 61 in the width direction of the sliding groove 71 is greater than a width of the sliding groove 71.

Preferably, the instrument panel 8 is equipped with an avoidance opening 81, and the widths of the electrical component assembly 1 and the steering column shield 2 are both less than or equal to the width of the avoidance opening 81. When the second connecting rod 6 slides up and down along the sliding groove 71, the electrical component assembly 1 and the steering column shield 2 correspondingly move up and down within the avoidance opening 81.

Preferably, it further includes a soft cover 9, which is fixedly connected between the electrical component assembly 1 and the instrument panel 8. The soft cover 9 is configured for shielding the first connecting rod 5, the second connecting rod 6, and the guide rail bracket 7, improving the overall aesthetics of the mounting structure and the user experience.

Specifically, the soft cover 9 is preferably made of PU material.

Preferably, the outer surface of the magnetic member 4 is covered with an electroplating protective layer for stabilizing the outer surface of the magnetic member 4. By providing the electroplating protective layer, the magnetic member 4 has high weather resistance and excellent corrosion resistance.

Preferably, a lubricating grease is added into the first groove 11, for reducing a friction between the first protrusion 21 and the first groove 11, which helps to the relative movement between the first protrusion 21 and the first groove 11.

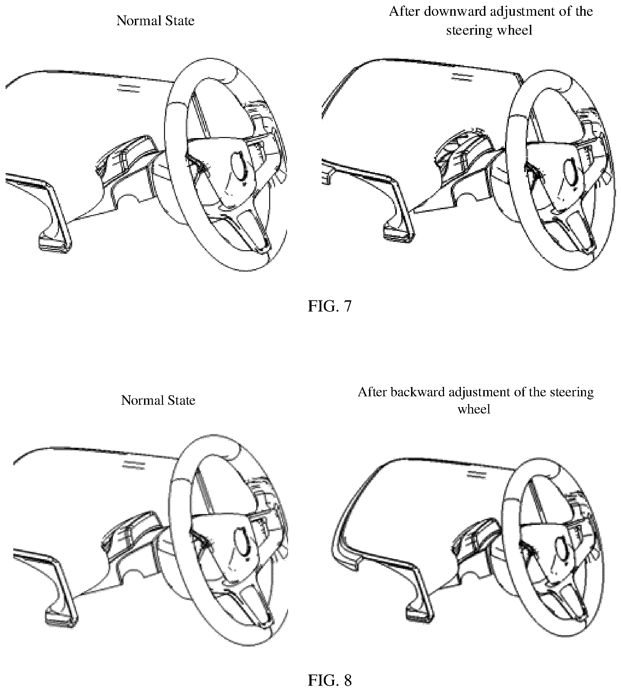

When the steering wheel 3 is adjusted up and down, the movement relationship between the electrical component assembly 1 and the steering column shield 2 is as follows. Figure 7 is a schematic diagram of the fatigue monitoring camera mounting structure before and after a downward adjustment of the steering wheel according to an embodiment of the present document.
1) The driver adjusts the steering wheel 3 up and down;
2) The steering wheel 3 drives the steering column to move up and down;
3) The steering column shield 2, which is fixed on the steering column, drives the electrical component assembly 1 tightly adsorbed to the upper surface of the steering column shield 2 to move up and down together. The electrical component assembly 1 slides up and down along the sliding groove 71 through the second connecting rod 6, thereby achieving the up and down adjustment of the steering wheel 3.

When the steering wheel 3 is adjusted back and forth, the movement relationship between the electrical component assembly 1 and the steering column shield 2 is as follows. Figure 8 is the schematic diagram of the fatigue monitoring camera mounting structure before and after a backward adjustment of the steering wheel according to an embodiment of the present document.
1) The driver adjusts the steering wheel 3 back and forth;
2) The steering wheel 3 drives the steering column to move back and forth;
3) The steering column shield 2 fixed on the steering column moves back and forth with the steering column;
4) Since the second connecting rod 6 fixed to the electrical component assembly 1 is limited in the sliding groove 71, the electrical component assembly 1 does not move in the back and forth directions, so that the steering column shield 2 slides back and forth relative to the electrical component assembly 1, thereby achieving the back and forth adjustment of the steering wheel 3.

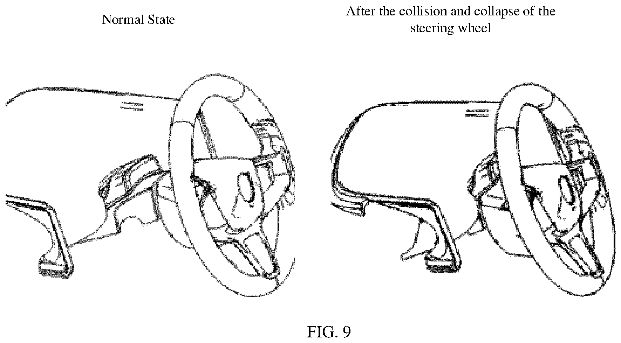

When the steering wheel 3 collides and collapses, the movement relationship between the electrical component assembly 1 and the steering column shield 2 is as follows. Figure 9 is a schematic diagram of the fatigue monitoring camera mounting structure before and after the collision and collapse of the steering wheel according to an embodiment of the present document.
1) The steering wheel 3 collapsed due to driver collision;
2) The steering wheel 3 drives the steering column to move backwards;
3) The steering column shield 2 fixed on the steering column moves backwards with the steering column;
4) Due to the second connecting rod 6 fixed to the electrical component assembly 1 is limited in the sliding groove 71, the electrical component assembly 1 does not move in the back and forth directions. Therefore, the steering column shield 2 gradually slides backwards relative to the electrical component assembly 1, and then separates from the electrical component assembly 1, thereby achieving the collapse of the steering wheel 3.

### Example 2:

As shown in Figures 1-6, this embodiment provides an instrument panel assembly, which includes an instrument panel 8 and the fatigue monitoring camera mounting structure in Example 1. The fatigue monitoring camera mounting structure includes a guide rail bracket 7, and the fatigue monitoring camera mounting structure is fixed to the back portion of the instrument panel 8 through the guide rail bracket 7. By combining the instrument panel 8 with a brand new designed mounting structure, an instrument panel assembly is formed, which not only achieves semi linkage between the electrical component assembly 1 and the steering column shield 2, but also saves space on the inner side of the instrument panel 8. This helps to achieve a simple structural design of the instrument panel assembly and enhance its aesthetic appearance.

### Example 3:

This embodiment provides an automobile, which includes the instrument panel assembly in Example 2. By arranging this new structure of the instrument panel assembly on the automobile, it ensures the collision safety while meeting technical requirements, improves space limitation problems, and ensures the overall simplicity of the instrument panel design, thereby making the interior design of the automobile aesthetically pleasing and enhancing the user experience.

Although the present document has been described through preferred embodiments, the present document is not limited to the embodiments described here and may include various modifications and variations without departing from the scope of the present document.

In this article, the involved terms such as front, back, upper, lower and other directional words are defined based on the location of the components in the drawings and the positions of the components relative to each other, only for clarity and convenience in expressing the technical solution. It should be understood that the use of the directional words shall not limit the scope of protection claimed in the present document.

The above embodiments and the features in the embodiments herein can be combined with each other without conflict.

The above disclosure is only a preferred embodiment of the present document. Of course, it cannot be used to limit the scope of the present document. Therefore, equivalent changes made in accordance with the claims of the present document still fall within the scope of the present document.

## Claims

1. A fatigue monitoring camera mounting structure, **characterized in that** comprising:
an electrical component assembly (1) capable of moving up and down relative to an instrument panel (8), and configured for detecting a fatigue state of a driver;
a steering column shield (2) configured for fixedly sleeved around a steering column, the steering column being configured for fixedly connected to a steering wheel (3), a side end of the steering column shield (2) being close to the steering wheel (3), and the steering column shield (2) being located below the electrical component assembly (1), the steering column shield (2) or the electrical component assembly (1) being provided with a magnetic member (4), the electrical component assembly (1) and the steering column shield (2) being magnetically connected through the magnetic member (4), the steering column shield (2) being capable of sliding back and forth relative to the electrical component assembly (1) when the steering wheel (3) is adjusted back and forth.

2. The fatigue monitoring camera mounting structure according to claim **1,** wherein the electrical component assembly (1) matches the steering wheel (3) during the steering column shield (2) moves in a collapsing direction to separate from the electrical component assembly (1) when a collision collapse occurs.

3. The fatigue monitoring camera mounting structure according to claim **1,** wherein one of a lower surface of the electrical component assembly (1) and the steering column shield (2) is equipped with a first groove (11), a length of the first groove (11) is in an axial direction of the steering column, and the other of the lower surface of the electrical component assembly (1) and the steering column shield (2) is equipped with a first protrusion (21), the first protrusion (21) is located in the first groove (11), and one of the first protrusion (21) and the first groove (11) is equipped with the magnetic member (4) and the other of the first protrusion (21) and the first groove (11) is equipped with a ferromagnetic body.

4. The fatigue monitoring camera mounting structure according to claim 3, wherein a length of the first groove (11) is greater than or equal to a length of the first protrusion (21).

5. The fatigue monitoring camera mounting structure according to claim **3,** wherein the first groove (11) is a strip groove, and the first protrusion (21) is a strip protrusion.

6. The fatigue monitoring camera mounting structure according to claim **1,** further comprising a first connecting rod (5), a second connecting rod (6), and a guide rail bracket (7),
the guide rail bracket (7) being configured for being fixed on a back portion of the instrument panel (8), and the guide rail bracket (7) being equipped with a sliding groove (71),
one end of the first connecting rod (5) being fixedly connected to the electrical component assembly (1), and the other end of the first connecting rod (5) being fixedly connected to the second connecting rod (6),
the second connecting rod (6) passing through the sliding groove (71) and being limited in the sliding groove (71) along an axial direction of the second connecting rod (6), the second connecting rod (6) being slidable up and down along the sliding groove (71) when the steering wheel (3) is adjusted up and down.

7. The fatigue monitoring camera mounting structure according to claim **6,** wherein the guide rail bracket (7) is equipped with two side wings, and the sliding groove (71) is arranged on a corresponding side wing,
the second connecting rod (6) is equipped with two clamping portions (61) close to two ends thereof, and the second connecting rod (6) passes through the sliding groove (71), with the clamping portions (61) abutting against inner sides of the corresponding side wings.

8. The fatigue monitoring camera mounting structure according to claim **6,** wherein the instrument panel (8) is equipped with an avoidance opening (81), and widths of the electrical component assembly (1) and the steering column shield (2) are both less than or equal to a width of the avoidance opening (81), the electrical component assembly (1) and the steering column shield (2) correspondingly move up and down within the avoidance opening (81) when the second connecting rod (6) slides up and down along the sliding groove (71).

9. The fatigue monitoring camera mounting structure according to claim **7,** further comprising a soft cover (9), which is fixedly connected between the electrical component assembly (1) and the instrument panel (8) and is configured for shielding the first connecting rod (5), the second connecting rod (6), and the guide rail bracket (7).

10. The fatigue monitoring camera mounting structure according to claim **1,** wherein an outer surface of the magnetic member (4) is covered with an electroplating protective layer for stabilizing the outer surface of the magnetic member (4).

11. The fatigue monitoring camera mounting structure according to claim **3,** wherein a lubricating grease is added into the first groove (11).

12. An instrument panel assembly, **characterized in that** comprising an instrument panel (8) and a fatigue monitoring camera mounting structure as claimed in any one of claims **1-11,** the fatigue monitoring camera mounting structure comprising a guide rail bracket (7), the fatigue monitoring camera mounting structure being fixed to a back portion of the instrument panel (8) through the guide rail bracket (7).

13. An automobile, **characterized in that** comprising an instrument panel assembly as claimed in claim **12.**
